# EUROPÄISCHE PATENTSCHRIFT

(11) **EP 1 273 612 B1**
(45) Veröffentlichungstag und Bekanntmachung des Hinweises auf die Patenterteilung: **20.09.2006**
(21) Anmeldenummer: 02012517.5
(22) Anmeldetag: 05.06.2002
(51) Int. Cl.: C08G 77/22, C08G 77/26, C08G 77/28, C08G 77/04, C08G 77/38, C08L 21/00

(54) **Siloxan-Oligomere, Verfahren zu deren Herstellung und deren Verwendung**
Oligomeric siloxanes, process for their preparation and their use
Siloxanes oligomères, procédé pour leur fabrication et leur utilisation

(30) Priorität: 06.07.2001 DE 10132942
(43) Veröffentlichungstag der Anmeldung: 08.01.2003
(73) Patentinhaber: Degussa AG, 40474 Düsseldorf (DE)
(72) Erfinder: Krafczyk, Roland, Dr., 79618 Rheinfelden (DE); Monkiewicz, Jaroslaw, Dr., 79618 Rheinfelden (DE); Treffeisen, Börn, 79194 Gundelfingen (DE)

(56) Entgegenhaltungen:
- EP-A- 0 652 245
- DE-A- 19 825 796
- US-A- 6 107 505

## Beschreibung

Die Erfindung betrifft Siloxan-Oligomere, ein Verfahren zu deren Herstellung sowie deren Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane, sowie Mercaptoalkyltrialkoxysilane als Haftvermittler zwischen anorganischen Materialien (z.B. Glasfasern, Metallen, oxidischen Füllstoffen) und organischen Polymeren (z.B. Duroplasten, Thermoplasten, Elastomeren) bzw. als Vernetzungsmittel und Oberflächenmodifizierungsmittel eingesetzt.

Diese Kopplungs- oder Verbindungsagenzien bilden sowohl zum Füllstoff als auch zum Elastomer Bindungen und bewirken somit zwischen der Füllstoffoberfläche und dem Elastomer eine gute Wechselwirkung. Sie erniedrigen die Mischungsviskosität und erleichtern die Dispersion des Füllstoffs.

Des weiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während des Mischprozesses führt.

Diese Alkoholmenge kann reduziert werden, wenn anstelle von monomeren Silanen entsprechende Siloxan-Oligomere eingesetzt werden. In EP 0 518 057 B1 und in EP 0 652 245 B1 werden Siloxan-Oligomere und Siloxan-Co-Oligomere durch Kondensation bzw. Co-Kondensation von Silanen beschrieben.

Nachteile der bekannten Siloxan-Oligomere sind
- das Fehlen von funktionalisierten Alkylgruppen, die für spätere chemische Umsetzungen notwendig sind und
- das aufwendige Verfahren zur Herstellung der Alkoxysiloxane durch Umsetzung der entsprechenden Chlorsilane mit Alkohol und anschließendes Entfernen des Alkohols bei der Oligomerisierung beziehungsweise Co-Oligomerisierung mit anderen Alkoxysilanen.

Aufgabe der vorliegenden Erfindung ist es, Siloxan-Oligomere mit funktionalisierten Alkylgruppen herzustellen.

Siloxan-Oligomere sind Verbindungen der allgemeinen Formel I oder II 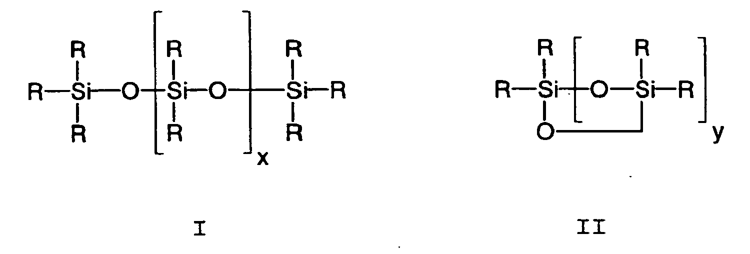 in denen x eine ganze Zahl von 0 bis 1000, y eine Zahl von 1 bis 1000 bedeutet,
die Substituenten R gleich oder verschieden sind und aus funktionalisierten Alkyl-Gruppen, (C₁ - C₁₈) Alkyl, (C₁-C₄)Alkoxy, vorzugsweise Methoxy- oder Ethoxy-Gruppen, (C₁-C₄)Haloalkoxy, Phenyl, Aryl, Aralkyl oder Hydroxi-Gruppen bestehen und mindestens eine funktionalisierte Alkylgruppe pro Oligomermolekül vorhanden ist.

Es kann maximal eine funktionalisierte Alkylgruppe pro Siliciumatom vorhanden sein.

Die funktionalisierte Alkylgruppe kann eine Halogen-, Amino-, Methacryloxy-, Mercapto-, Thiocyanato- oder Azido-Alkylgruppe sein.

Die funktionalisierte Alkylgruppe kann eine Di- oder Polysulfidbrücke Sₓ, mit x zwischen 2 und 8, sein, die zwei funktionalisierte Alkylgruppen über die Di- beziehungsweise Polysulfidbrücke verbindet.

Die Siloxan-Oligomere können sowohl als einzelne Verbindungen mit einem definierten Molekulargewicht als auch als Oligomerengemisch mit einer Molekulargewichtsverteilung vorliegen.

Gegenstand der Erfindung ist ein Verfahren zur Herstellung der Siloxan-Oligomere der allgemeinen Formel I oder II, welches dadurch gekennzeichnet ist, daß man Halogenalkyltrihalogensilane in Gegenwart von Alkohol und Wasser oligomerisiert und mit (C₁-C₁₈)-Alkyl-, Phenyl-, Aryl- oder Aralkyl-trihalogensilanen und /oder Siliciumtetrachlorid co-oligomerisiert und gegebenenfalls in einem weiteren Schritt die Halogenalkylfunktion modifiziert.

Als Alkohol kann man Propanol, Ethanol, Methanol, Diole oder Polyole verwenden.

Als Alkyltrihalogensilan kann man (C₁-C₁₈)-Alkyltrichlorsilane, beispielsweise Methyltrichlorsilan, Ethyltrichlorsilan oder Propyltrichlorsilan, verwenden.

Die Wassermenge kann aus dem erforderlichen Oligomerisierungsgrad berechnet werden. Die freiwerdende Halogenwasserstoffsäure kann man anschließend abtrennen.

Auf die Zugabe eines für die Oligomerisierung und/oder Co-Oligomerisierung üblichen Katalysators, wie zum Beispiel Chlorwasserstoff, kann verzichtet werden, da er während der Reaktion des Halogensilans mit Alkohol entsteht. Das Chlorsilan kann in das Alkohol/Wasser-Gemisch zutropft werden oder umgekehrt.

Die Halogenalkylfunktion kann mit folgenden Verbindungen modifiziert werden:
- mit Ammoniak unter Abtrennung von Ammoniumhalogenid zur Herstellung der Aminoalkylsiloxan-Oligomeren,
- mit Natrium- oder Kaliummethacrylat unter Abtrennung von Natrium- oder Kaliumhalogenid zur Herstellung der Methacryloxyalkylsiloxan-Oligomeren,
- mit Natriumpolysulfid oder Natriumsulfid und Schwefel oder Natriumpolysulfid und Natriumsulfid unter Abtrennung von Natriumhalogenid zur Herstellung der Bis[3-triethoxy-alkyl]polysulfan-Siloxan-Oligomere oder Bis[3-triethoxy-alkyl]disulfan-Siloxan-Oligomere,
- mit Ammoniak und Schwefelwasserstoff oder Ammoniumhydrogensulfid unter Abtrennung von Ammoniumhalogenid oder Natrium- oder Kaliumhydrogensulfid unter Abtrennung von Natrium- oder Kaliumhalogenid zur Herstellung der Mercaptoalkylsiloxan-Oligomere,
- mit Natrium-, Kalium- oder Ammoniumrhodanid unter Abtrennung von Natrium-, Kalium- oder Ammoniumhalogenid zur Herstellung der Thiocyanatoalkylsiloxan-Oligomere,
- mit Natriumazid unter Abtrennung von Natriumhalogenid zur Herstellung der Azidoalkylsiloxan-Oligomere.

Für die Modifizierung der Halogenalkylfunktion kann der Alkohol abgetrennt werden.

Die Siloxan-Oligomere haben den Vorteil, daß sie funktionalisierte Alkygruppen besitzen, die für weitere Umsetzungen zur Verfügung stehen.

Die Siloxan-Oligomere können als Kopplungsagenz in Kautschukmischungen oder als Bautenschutzmittel verwendet werden.

Die Kautschukmischungen können Kautschuk, gefällte Kieselsäure und / oder Ruß, die Siloxan-Oligomere und gegebenenfalls weitere Kautschukhilfsmittel enthalten.

Für die Herstellung von Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.
- Polybutadien (BR)
- Polyisopren (IR)
- Styrol/Butadien-Copolymerisate mit Styrolgehalten von 1 bis 60, vorzugsweise 5 bis 50 Gew.-% (E-SBR oder L-SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew. -% (NBR)
- Ethylen/Propylen/Dien-Copolymerisate (EPDM)
sowie Mischungen dieser Kautschuke.

Die Kautschukmischungen können weitere Kautschukhilfsprodukte wie unter anderem Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol, die der Kautschukindustrie bekannt sind enthalten.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-%, bezogen auf Kautschuk.

Als Vernetzer können Schwefel, organische Schwefelspender oder Radikalbildner dienen. Die Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit dem Füllstoff und den Siloxan-Oligomeren, gegebenenfalls Kautschukhilfsmitteln, kann in üblichen Mischaggregaten, wie Walzen, Innenmischern und Mischextrudern, durchgeführt werden. Üblicherweise werden solche Kautschukmischungen im Innenmischern hergestellt, wobei zunächst in einer oder mehreren aufeinanderfolgenden thermomechanischen Mischstufen die Kautschuke, die Füllstoffe und die Siloxan-Oligomere, gegebenenfalls die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der Kautschukmischungen kann bei Temperaturen von 80 bis 200°C, bevorzugt 130 bis 180°C, gegebenenfalls unter Druck von 10 bis 200 bar erfolgen.

Die Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsolen, Dichtungsringen, Profilen und Dämpfungselementen.

Die Siloxan-Oligomerehaben die Vorteile einer geringen Alkoholabspaltung bei der Reaktion in Kautschuk und besitzen funktionalisierte Alkylgruppen für spätere chemische Umsetzungen.

### Beispiel 1: Umsetzung eines Chlorpropyltrichlorsilan-Propyltrichlorsilan-Gemisches mit Wasser und Ethanol

In einem 1-Liter-Dreihalskolben mit Rührer, Kühler und Stickstoffeinleitrohr werden 106,7 g Chlorpropyltrichlorsilan und 193,6 g Propyltrichlorsilan als Gemisch vorgelegt. In 50 Minuten wird unter Kühlung eine Lösung aus 380 ml Ethanol und 17,2 g Wasser zugetropft. Anschließend wird für 4 Stunden am Rückfluß erhitzt und das Chlorwasserstoffgas ausgetrieben. Nach Entfernen des überschüssigen Ethanols werden 228,0 g einer klaren hellgelben Flüssigkeit erhalten. Das Verhältnis Propylrest zu Chlorpropylrest beträgt 2 zu 1.

¹H-NMR (CDCl₃): δ 0,60 (m, 4 H, Si-CH₂-CH₂-CH₃), 0,75 (m, 2 H, Si-CH₂-CH₂-CH₂-Cl), 0,95 (t, 6 H, ³*J*_{H-H} = 7 Hz, Si-CH₂-CH₂-CH₃), 1,20 (m, 12 H, CH₃-CH₂-O-Si), 1,45 (m, 4 H, Si-CH₂-CH₂-CH₃), 1,85 (m, 2 H, Si-CH₂-CH₂-CH₂-Cl), 3,50 (m, 2 H, Si-CH₂-CH₂-CH₂-Cl), 3,80 (m, 8 H, CH₃-CH₂-O-Si); Hydrolysierbares Chlorid: 0,16%.

### Beispiel 2: Umsetzung eines Chlorpropyltrichlorsilan-Octyltrichlorsilan-Gemisches mit Wasser und Ethanol

In einem 1-Liter-Dreihalskolben mit Rührer, Kühler und Stickstoffeinleitrohr werden 106,7 g Chlorpropyltrichlorsilan und 111,8 g Octyltrichlorsilan als Gemisch vorgelegt. In 40 Minuten wird unter Kühlung eine Lösung aus 240 ml Ethanol und 10,7 g Wasser zugetropft. Anschließend wird für 4 Stunden am Rückfluß erhitzt und das Chlorwasserstoffgas ausgetrieben. Nach Entfernen des überschüssigen Ethanols werden 182,3 g einer klaren farblosen Flüssigkeit erhalten. Das Verhältnis Octylrest zu Chlorpropylrest beträgt 1 zu 1.

¹H-NMR (CDCl₃): δ 0,60 (m, 2 H, Si-CH₂-(CH₂)₆-CH₃), 0,80 (m, 2 H, Si-CH₂-CH₂-CH₂-Cl), 0,90 (t, 3 H, ³*J*_{H-H} = 7 Hz, Si-CH₂-(CH₂)₆-CH₃), 1,25 (m, 9 H, CH₃-CH₂-O-Si), 1,3-1,5 (m, 12 H, Si-CH₂-(CH₂)₆-CH₃), 1,85 (m, 2 H, Si-CH₂-CH₂-CH₂-Cl), 3,55 (m, 2 H, Si-CH₂-CH₂-CH₂-Cl), 3,80 (m, 6 H, CH₃-CH₂-O-Si); Hydrolysierbares Chlorid: 0,14%.

### Beispiel 3: Umsetzung eines Chlorpropyltrichlorsilan-Hexadecyltrichlorsilan-Gemisches mit Wasser und Ethanol

In einem 1-Liter-Dreihalskolben mit Rührer, Kühler und Stickstoffeinleitrohr werden 106,7 g Chlorpropyltrichlorsilan und 74,1 g Hexadecyltrichlorsilan als Gemisch vorgelegt. In 50 Minuten wird unter Kühlung eine Lösung aus 180 ml Ethanol und 8,0 g Wasser zugetropft. Anschließend wird für 4 Stunden am Rückfluß erhitzt und das Chlorwasserstoffgas ausgetrieben. Nach Entfernen des überschüssigen Ethanols werden 145,3 g einer klaren hellgelben Flüssigkeit erhalten. Das Verhältnis Hexadecylrest zu Chlorpropylrest beträgt 1 zu 2,5.

¹H-NMR (CDCl₃): δ 0,65 (m, 2 H, Si-CH₂-(CH₂)₁₄-CH₃), 0,80 (m, 5 H, Si-CH₂-CH₂-CH₂-Cl), 0,85 (t, 3 H, ³*J*_{H-H} = 7 Hz, Si-CH₂-(CH₂)₁₄-CH₃), 1,25 (m, 15 H, CH₃-CH₂-O-Si), 1,3-1,5 (m, 28 H, Si-CH₂-(CH₂)₁₄-CH₃), 1,90 (m, 5 H, Si-CH₂-CH₂-CH₂-Cl), 3,55 (m, 5 H, Si-CH₂-CH₂-CH₂-Cl), 3,80 (m, 10 H, CH₃-CH₂-O-Si); Hydrolysierbares Chlorid: <0,1%.

### Beispiel 4: Umsetzung des Chlorpropylsilan-Propylsilan-Co-Oligomers mit Schwefelwasserstoff und Ammoniak

In einem 1-Liter-Autoklaven mit Rührer werden 225 g des Co-Oligomers aus Beispiel 1 in 250 ml Ethanol vorgelegt. Nach Inertisierung durch zweimaliges Abdrücken mit Stickstoff und anschließendem Evakuieren werden innerhalb von 30 Minuten 21 g Ammoniak und 34 g Schwefelwasserstoff in den Autoklaven gedrückt. Nach 12 h Rühren bei 120 °C wird auf Raumtemperatur abgekühlt und das überschüssige Ammoniak/Schwefelwasserstoffgemisch durch eine Wasserstoffperoxidlösung abgeblasen. Nach Filtration vom ausgefallenen Ammoniumchlorid und Entfernen des Ethanols vom Filtrat werden 221 g einer klaren farblosen Flüssigkeit erhalten.

¹H-NMR (CDCl₃): δ 0,60 (m, 4 H, Si-CH₂-CH₂-CH₃), 0,75 (m, 2 H, Si-CH₂-CH₂-CH₂-SH), 0,95 (t, 6 H, ³*J*_{H-H} = 7 Hz, Si-CH₂-CH₂-CH₃), 1,20 (m, 12 H, CH₃-CH₂-O-Si), 1,45 (m, 4 H, Si-CH₂-CH₂-CH₃), 1,85 (m, 2 H, Si-CH₂-CH₂-CH₂-SH), 2,60 (m, 2 H, Si-CH₂-CH₂-CH₂-SH), 3,80 (m, 8 H, CH₃-CH₂-O-Si).

### Beispiel 5: Umsetzung des Chlorpropylsilan-Octylsilan-Co-Oligomers mit Schwefelwasserstoff und Ammoniak

In einem 1-Liter-Autoklaven mit Rührer werden 180 g des Co-Oligomers aus Beispiel 2 in 200 ml Ethanol vorgelegt. Nach Inertisierung durch zweimaliges Abdrücken mit Stickstoff und anschließendem Evakuieren werden innerhalb von 30 Minuten 21 g Ammoniak und 34 g Schwefelwasserstoff in den Autoklaven gedrückt. Nach 12 h Rühren bei 120 °C wird auf Raumtemperatur abgekühlt und das überschüssige Ammoniak/Schwefelwasserstoffgemisch durch eine Wasserstoffperoxidlösung abgeblasen. Nach Filtration vom ausgefallenen Ammoniumchlorid und Entfernen des Ethanols vom Filtrat werden 176 g einer klaren farblosen Flüssigkeit erhalten.

¹H-NMR (CDCl₃) : δ 0,60 (m, 2 H, Si-CH₂-(CH₂)₆-CH₃), 0,80 (m, 2 H, Si-CH₂-CH₂-CH₂-SH), 0,90 (t, 3 H, ³*J*_{H-H} = 7 Hz, Si-CH₂-(CH₂)₆-CH₃), 1,25 (m, 9 H, CH₃-CH₂-O-Si), 1,3-1,5 (m, 12 H, Si-CH₂-(CH₂)₆-CH₃), 1,85 (m, 2 H, Si-CH₂-CH₂-CH₂-SH), 2,60 (m, 2 H, Si-CH₂-CH₂-CH₂-SH), 3,80 (m, 6 H, CH₃-CH₂-O-Si).

### Beispiel 6: Umsetzung des Chlorpropylsilan-Hexadecylsilan-Co-Oligomers mit Schwefelwasserstoff und Ammoniak

In einem 1-Liter-Autoklaven mit Rührer werden 145 g des Co-Oligomers aus Beispiel 3 in 150 ml Ethanol vorgelegt. Nach Inertisierung durch zweimaliges Abdrücken mit Stickstoff und anschließendem Evakuieren werden innerhalb von 30 min. 21 g Ammoniak und 34 g Schwefelwasserstoff in den Autoklaven gedrückt. Nach 12 h Rühren bei 120 °C wird auf Raumtemperatur abgekühlt und das überschüssige Ammoniak/Schwefelwasserstoffgemisch durch eine Wasserstoffperoxidlösung abgeblasen. Nach Filtration vom ausgefallenen Ammoniumchlorid und Entfernen des Ethanols vom Filtrat werden 139 g einer klaren farblosen Flüssigkeit erhalten.

¹H-NMR (CDCl₃): δ 0,65 (m, 2 H, Si-CH₂-(CH₂)₁₄-CH₃), 0,80 (m, 5 H, Si-CH₂-CH₂-CH₂-SH), 0,85 (t, 3 H, ³*J*_{H-H} = 7 Hz, Si-CH₂-(CH₂)₁₄-CH₃), 1,25 (m, 15 H, CH₃-CH₂-O-Si), 1,3-1,5 (m, 28 H, Si-CH₂-(CH₂)₁₄-CH₃), 1,90 (m, 5 H, Si-CH₂-CH₂-CH₂-SH), 2,60 (m, 5 H, Si-CH₂-CH₂-CH₂-SH), 3,80 (m, 10 H, CH₃-CH₂-O-Si).

### Beispiel 7: Umsetzung des Chlorpropylsilan-Propylsilan-Co-Oligomers mit Ammoniak

In einem 2-Liter-Autoklaven mit Rührer werden 221 g des Co-Oligomers aus Beispiel 1 in 250 ml Ethanol vorgelegt. Nach Inertisierung durch zweimaliges Abdrücken mit Stickstoff und anschließendem Evakuieren werden innerhalb von 30 Minuten 150 g Ammoniak in den Autoklaven gedrückt. Nach 16 h Rühren bei 120 °C wird auf Raumtemperatur abgekühlt und der überschüssige Ammoniak abgeblasen. Nach Filtration vom ausgefallenen Ammoniumchlorid und Entfernen des Ethanols vom Filtrat werden 216 g einer klaren hellgelben Flüssigkeit erhalten.

¹H-NMR (CDCl₃): δ 0,60 (m, 4 H, Si-CH₂-CH₂-CH₃), 0,65 (m, 2 H, Si-CH₂-CH₂-CH₂-NH₂), 0,95 (t, 6 H, ³*J*_{H-H} = 7 Hz, Si-CH₂-CH₂-CH₃), 1,20 (m, 12 H, CH₃-CH₂-O-Si), 1,45 (m, 4 H, Si-CH₂-CH₂-CH₃), 1,55 (m, 2 H, Si-CH₂-CH₂-CH₂-NH₂), 2,60 (m, 2 H, Si-CH₂-CH₂-CH₂-NH₂), 3,80 (m, 8 H, CH₃-CH₂-O-Si).

### Beispiel 8: Umsetzung des Chlorpropylsilan-Octylsilan-Co-Oligomers mit Natriumrhodanid

In einem 1-Liter-Autoklaven mit Rührer werden 105 g des Co-Oligomers aus Beispiel 2 und 23 g Natriumrhodanid in 100 ml Ethanol vorgelegt. Nach Inertisierung durch zweimaliges Abdrücken mit Stickstoff wird 8 h lang unter Eigendruck bei 115 °C gerührt. Nach Abkühlen auf Raumtemperatur, Filtration vom ausgefallenen Natriumchlorid und Entfernen des Ethanols vom Filtrat werden 108 g einer klaren gelben Flüssigkeit erhalten.

¹H-NMR (CDCl₃): δ 0,60 (m, 2 H, Si-CH₂-(CH₂)₆-CH₃), 0,75 (m, 2 H, Si-CH₂-CH₂-CH₂-SCN), 0,95 (t, 3 H, ³*J*_{H-H} = 7 Hz, Si-CH₂-(CH₂)₆-CH₃), 1,20 (m, 12 H, CH₃-CH₂-O-Si), 1,3-1,5 (m, 12 H, Si-CH₂-(CH₂)₆-CH₃), 1,95 (m, 2 H, Si-CH₂-CH₂-CH₂-SCN), 3,00 (m, 2 H, Si-CH₂-CH₂-CH₂-SCN), 3,80 (m, 8 H, CH₃-CH₂-O-Si).

### Beispiel 9: Umsetzung des Chlorpropylsilan-Octylsilan-Co-Oligomers mit Natriummethacrylat

In einem 1-Liter-Autoklaven mit Rührer werden 102 g des Co-Oligomers aus Beispiel 2, 30 g Natriummethacrylat und 50 mg N,N'-Diphenyl-p-phenylendiamin in 100 ml DMF vorgelegt. Nach Inertisierung durch zweimaliges Abdrücken mit Stickstoff wird 12 h lang unter Eigendruck bei 115 °C gerührt. Nach Abkühlen auf Raumtemperatur, Filtration vom ausgefallenen Natriumchlorid, Entfernen des Ethanols vom Filtrat und erneutem Filtrieren werden 112 g einer klaren farblosen Flüssigkeit erhalten.

¹H-NMR (CDCl₃): δ 0,60 (m, 2 H, Si-CH₂-(CH₂)₆-CH₃), 0,70 (m, 2 H, Si-CH₂-CH₂-CH₂-O-C(=O)-C(CH₃)=CH₂)), 0,95 (t, 3 H, ³*J*_{H-H} = 7 Hz, Si-CH₂-(CH₂)₆-CH₃), 1,20 (m, 12 H, CH₃-CH₂-O-Si), 1,3-1,5 (m, 12 H, Si-CH₂-(CH₂)₆-CH₃), 1,80 (m, 2 H, Si-CH₂-CH₂-CH₂-O-C(=O)-C(CH₃)=CH₂), 2,00 (m, 3 H, Si-CH₂-CH₂-CH₂-O-C(=O)-C(CH₃)=CH₂), 3,80 (m, 8 H, CH₃-CH₂-O-Si), 4,15 (m, 2 H, Si-CH₂-CH₂-CH₂-O-C(=O)-C(CH₃)=CH₂), 5,50 und 6,10 (2 s, 2 H, Si-CH₂-CH₂-CH₂-O-C(=O)-C(CH₃)=CH₂).

### Beispiel 10: Umsetzung des Chlorpropylsilan-Octylsilan-Co-Oligomers mit Natriumpolysulfid

In einem 1-Liter-Kolben mit Rührer und Kühler werden 101 g des Co-Oligomers aus Beispiel 2 in 100 ml Ethanol vorgelegt Nach Zugabe von 25 g Natriumpolysulfid (Na₂S₄) wird unter Stickstoff 4 h lang bei 82 °C gerührt. Nach Abkühlen auf Raumtemperatur, Filtration vom ausgefallenen Natriumchlorid und Entfernen des Ethanols vom Filtrat werden 109 g einer zähflüssigen, orangen Flüssigkeit erhalten.

¹H-NMR (CDCl₃): δ 0,60 (m, 2 H, Si-CH₂-(CH₂)₆-CH₃), 0,75 (m, 2 H, Si-CH₂-CH₂-CH₂-S), 0,95 (t, 3 H, ³*J*_{H-H} = 7 Hz, Si-CH₂-(CH₂)₆-CH₃), 1,20 (m, 12 H, CH₃-CH₂-O-Si), 1,3-1,5 (m, 12 H, Si-CH₂-(CH₂)₆-CH₃), 1,7-2,0 (m, 2 H, Si-CH₂-CH₂-CH₂-S), 2,7-3,1 (m, 2 H, Si-CH₂-CH₂-CH₂-S), 3,80 (m, 8 H, CH₃-CH₂-O-Si).

## Patentansprüche

1. Verfahren zur Herstellung der Siloxan-Oligomere der allgemeinen Formel I oder II 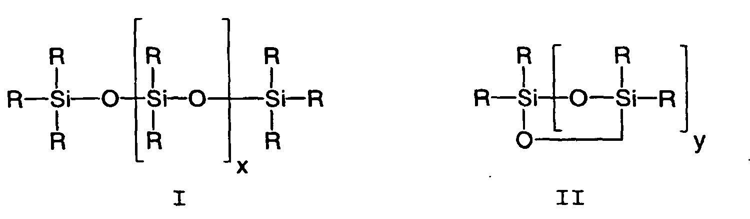 , **dadurch gekennzeichnet, daß** man Halogenalkyltrihalogensilane in Gegenwart von Alkohol und Wasser oligomerisiert und mit (C₁₋C₁₈)-Alkyl-, Phenyl-, Aryl- oder Aralkyltrihalogensilanen und / oder Siliciumtetrachlorid, cooligomerisiert und gegebenenfalls in einem weiteren Schritt die Halogenalkylfunktion modifiziert.

2. Verfahren zur Herstellung der Siloxan-Oligomere nach Anspruch 1, **dadurch gekennzeichnet, daß** man die Halogenalkylfunktion mit Ammoniak unter Abtrennung von Ammoniumhalogenid modifiziert.

3. Verfahren zur Herstellung der Siloxan-Oligomere nach Anspruch 1, **dadurch gekennzeichnet, daß** man die Halogenalkylfunktion mit Natrium- oder Kaliummethacrylat unter Abtrennung von Natrium- oder Kaliumhalogenid modifiziert.

4. Verfahren zur Herstellung der Siloxan-Oligomere nach Anspruch 1, **dadurch gekennzeichnet, daß** man die Halogenalkylfunktion mit Ammoniak und Schwefelwasserstoff oder Ammoniumhydrogensulfid unter Abtrennung von Ammoniumhalogenid oder Natrium- oder Kaliumhydrogensulfid unter Abtrennung von Natrium- oder Kaliumhalogenid modifiziert.

5. Verfahren zur Herstellung der Siloxan-Oligomere nach Anspruch 1, **dadurch gekennzeichnet, daß** man die Halogenalkylfunktion mit Natrium-, Kalium- oder Ammoniumrhodanid unter Abtrennung von Natrium-, Kalium- oder Ammoniumhalogenid modifiziert.

6. Verfahren zur Herstellung der Siloxan-Oligomere nach Anspruch 1, **dadurch gekennzeichnet, daß** man die in denen x eine ganze Zahl von 0 bis 1000, y eine Zahl von 1 bis 1000 bedeutet,
die Substituenten R gleich oder verschieden sind und aus funktionalisierten Alkyl-Gruppen, (C₁ - C₁₈) Alkyl, (C₁ - C₄)Alkoxy, (C₁ - C₄)Haloalkoxy, Phenyl, Aryl, Aralkyl oder Hydroxi-Gruppen bestehen und mindestens eine funktionalisierte Alkylgruppe pro Oligomermolekül vorhanden ist Halogenalkylfunktion mit Natriumazid unter Abtrennung von Natriumhalogenid modifiziert.

7. Verfahren zur Herstellung der Siloxan-Oligomere nach Anspruch 1, **dadurch gekennzeichnet, daß** man die Halogenalkylfunktion mit Natriumpolysulfid oder Natriumsulfid und Schwefel oder Natriumpolysulfid und Natriumsulfid unter Abtrennung von Natriumhalogenid modifiziert.

## Claims

1. Process for the production of the siloxane oligomers of the general formula I or II 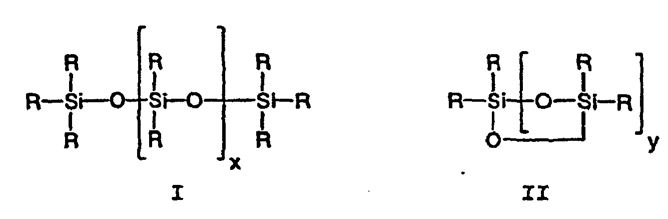 in which x is an integer from 0 to 1000, y is a number from 1 to 1000, the substituents R are identical or different and consist of functionalized alkyl groups, (C₁-C₁₈) alkyl, (C₁-C₄)alkoxy, (C₁-C₄)haloalkoxy, phenyl, aryl, aralkyl or hydroxy groups, and at least one functionalized alkyl group is present per oligomer molecule, **characterized in that** halogenalkyl trihalogensilanes are oligomerized in the presence of alcohol and water and co-oligomerized with (C₁-C₁₈)alkyl-, phenyl-, aryl- or aralkyl-trihalogensilanes and/or silicon tetrachloride, and optionally the halogenalkyl function is modified in a further step.

2. Process for the production of the siloxane oligomers according to Claim 1, **characterized in that** the halogenalkyl function is modified with ammonia and ammonium halide is separated off.

3. Process for the production of the siloxane oligomers according to Claim 1, **characterized in that** the halogenalkyl function is modified with sodium methacrylate or potassium methacrylate and sodium halide or potassium halide is separated off.

4. Process for the production of the siloxane oligomers according to Claim 1, **characterized in that** the halogenalkyl function is modified with ammonia and hydrogen sulphide or ammonium hydrogen sulphide and ammonium halide is separated off, or with sodium hydrogen sulphide or potassium hydrogen sulphide and sodium halide or potassium halide is separated off.

5. Process for the production of the siloxane oligomers according to Claim 1, **characterized in that** the halogenalkyl function is modified with sodium, potassium or ammonium rhodanide and sodium, potassium or ammonium halide is separated off.

6. Process for the production of the siloxane oligomers according to Claim 1, **characterized in that** the halogenalkyl function is modified with sodium azide and sodium halide is separated off.

7. Process for the production of the siloxane oligomers according to Claim 1, **characterized in that** the halogenalkyl function is modified with sodium polysulphide or with sodium sulphide and sulphur or with sodium polysulphide and sodium sulphide, and sodium halide is separated off.

## Revendications

1. Procédé pour la préparation d'oligomères de siloxane des formules générales I ou II 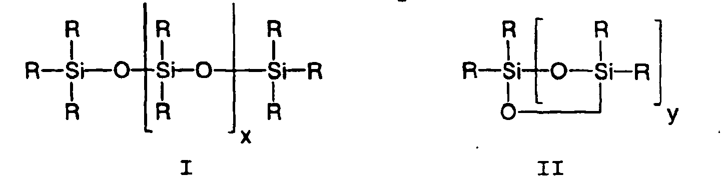 dans lesquelles x signifie un nombre entier de 0 à 1 000, y un nombre de 1 à 1 000,
les substituants R sont identiques ou différents et sont constitués par des groupes alkyle fonctionnalisés, alkyle en C₁ à C₁₈, alcoxy en C₁ à C₄, halogénoalcoxy en C₁ à C₄, phényle, aryle, aralkyle et/ou hydroxy et il existe au moins un groupe alkyle fonctionnalisé par molécule d'oligomère, **caractérisé en ce qu'**on oligomérise des halogénoalkyltrihalogénosilanes en présence d'alcool et d'eau et on les co-oligomérise avec des (alkyle en C₁ à C₁₈) alkyltrihalogénosilanes, des phényltrihalogénosilanes, des aryltrihalogénosilanes ou des aralkyltrihalogénosilanes et/ou du tétrachlorure de silicium et on modifie le cas échéant dans une autre étape la fonction halogénoalkyle.

2. Procédé pour la préparation des oligomères de siloxane selon la revendication 1, **caractérisé en ce qu'**on modifie la fonction halogénoalkyle avec de l'ammoniaque avec séparation d'halogénure d'ammonium.

3. Procédé pour la préparation d'oligomères de siloxane selon la revendication 1, **caractérisé en ce qu'**on modifie la fonction halogénoalkyle avec du méthacrylate de sodium ou de potassium avec séparation d'halogénure de sodium ou de potassium.

4. Procédé pour la préparation des oligomères de siloxane selon la revendication 1, **caractérisé en ce qu'**on modifie la fonction halogénoalkyle avec de l'ammoniaque et de l'acide sulfhydrique ou de l'hydrogénosulfure d'ammonium avec séparation d'halogénure d'ammonium ou avec de l'hydrogénosulfure de sodium ou de potassium avec séparation d'halogénure de sodium ou de potassium.

5. Procédé pour la préparation des oligomères de siloxane selon la revendication 1, **caractérisé en ce qu'**on modifie la fonction halogénoalkyle avec du thiocyanate de sodium, de potassium ou d'ammonium avec séparation d'halogénure de sodium, de potassium ou d'ammonium.

6. Procédé pour la préparation des oligomères de siloxane selon la revendication 1, **caractérisé en ce qu'**on modifie la fonction halogénoalkyle avec de l'azide de sodium avec séparation d'halogénure de sodium.

7. Procédé pour la préparation des oligomères de siloxane selon la revendication 1, **caractérisé en ce qu'**on modifie la fonction halogénoalkyle avec du polysulfure de sodium ou du sulfure de sodium et du soufre ou du polysulfure de sodium et du sulfure de sodium avec séparation d'halogénure de sodium.
